# EUROPEAN PATENT APPLICATION

(11) **EP 2 103 821 A2**
(43) Date of publication of application: **23.09.2009**
(21) Application number: 09003851.4
(22) Date of filing: 18.03.2009
(51) Int. Cl.: F16B 45/02, F16B 2/12

(54) **Clamp for plural wire harnesses**

(30) Priority: 18.03.2008 JP 2008069676
(71) Applicant: Newfrey LLC, Newark, Delaware 19711 (US)
(72) Inventor: Matsuno, Hiroto, Toyohashi-shi Aichi-ken (JP); Sakakibara, Kiyohito, Toyohashi-shi Aichi-ken (JP)
(74) Representative: Steil, Christian

(57) **Abstract**

The clamp (1) comprises a panel fixing portion (5) and a wire harness holding portion (6). The wire harness holding portion (6) includes a holding portion main unit (10) with a U-shaped groove (12) with an open upper portion and a cover portion (11). A plurality of protruding ribs (13) are formed on the inner wall surface on the bottom surface side of the holding portion main unit (10) and extend lengthwise with respect to the wire harnesses from the mid-height position of the U-shaped groove (12), the open portion upward from the mid-height position of the U-shaped groove (12) being wide enough to accommodate more wire harnesses above the mid-height position. The cover portion (11) is formed with an elastic harness pressing tab (23,25) for elastically pressing down on the upper portion of the wire harnesses, so that the entire outer periphery of the wire harnesses are elastically pressed down upon when covered.

## Description

### [Technical Field]

The present invention relates to a clamp for securely holding a plurality of wire harnesses in a manner similar to wrapping with tape, regardless of the number of wire harnesses.

### [Background Art]

It is common to wrap a plurality of wire harnesses with tape to secure the wire harnesses to a mounting component such as a panel.

[Patent Document 1] Published Unexamined Utility Model Application No. 5-047666
[Patent Document 2] Published Unexamined Utility Model Application No. 7-002690
[Patent Document 3] Published Unexamined Patent Application No. 7-059232
[Patent Document 4] Published Unexamined Patent Application No. 2006-187095
[Patent Document 5] Published Unexamined Patent Application No. 2005-113953

### [Disclosure of the Invention]

### [Problem Solved by the Invention]

Patent Document 1 describes a linear object retaining tool able to retain three to eight linear objects such as cords to a mounting component. n this retaining tool, a pressure applying and interposing tab is installed at one end of a mounting base plate and is freely bent via a hinge. An arc-shaped engagement tab stands erect from the other end of the mounting base plate along the arc-like swinging trajectory of the pressure applying and interposing tab. An engagement portion with an inverted U-shaped horizontal cross section and a space for inserting the engagement tab is formed on the free end of the pressure applying and interposing tab. By engaging the engagement tab and the engagement portion, three to eight linear objects can be fastened and retained between the mounting base plate and the pressure applying and interposing tab. Patent Document 1 describes a configuration in which a plurality of linear objects such as cords are retained on a mounting component using a single retaining tool. However, this retaining tool cannot keep the plurality of linear objects from sliding back and forth in the axial direction and in the direction perpendicular to the axial direction.

Patent Document 2 describes a holding tool for electrical wires able to secure long components such as two electrical wires to a mounting component. This holding tool is configured to mount two electrical wires separately, and cannot secure long components such as a plurality of wire harnesses together. Patent Document 3 describes an inexpensive clip for electrical wires able to easily secure electrical wires to a mounting component such as a vehicle body. This clip is configured to secure a single electric wire, and cannot secure long components such as a plurality of wire harnesses together.

The long object securing tool described in Patent Document 4 accommodates a plurality of long objects in a retaining portion with a semicircular grooved shape. A lid turning on a hinge is closed from above to hold the long objects in place. An elastic pressure-applying tab is formed in the lid to apply pressure to the upper surface of the long objects when the lid is closed. Because the retaining portion in this long object securing tool has a semicircular grooved shape, there is space on either side and, thus, space for the long objects to move. As a result, it cannot keep the long objects from moving in the direction perpendicular to the axial direction. The cable clamp described in Patent Document 5 has a configuration for holding a single cable in place. This cable clamp does not have a configuration able to secure long components such as a plurality of wire harnesses together. It cannot hold a plurality of cables so that they are enveloped all around such as when wrapped in tape.

Thus, the object of the present invention is to provide a wire harness clamp in which a plurality of wire harnesses can be retained without being able to move in the axial direction or in the direction perpendicular to the axial direction such as when a plurality of wire harnesses is wrapped with tape but without requiring the wire harnesses to be wrapped with tape.

### [Means of Solving the Problem]

In order to achieve this object, the present invention is a clamp having a wire harness holding portion for holding a plurality of wire harnesses, wherein the wire harness holding portion includes a rigid holding portion main unit having a U-shaped groove with an open upper portion and a space accommodating a plurality of wire harnesses, and a cover portion for closing the open upper portion of the holding portion main unit, wherein a plurality of protruding ribs is formed on the inner wall surface on the bottom surface side of the holding portion main unit and extend lengthwise with respect to the wire harnesses from the mid-height position of the U-shaped groove to align the wire harnesses so as to be stacked from the bottom surface, wherein the open portion above the mid-height position of the U-shaped groove is wide enough to accommodate more wire harnesses above the mid-height position, wherein the cover is formed with elastic wire harness pressing tabs for elastically pressing down on the upper portion of the wire harnesses when the cover portion is closed and the open portion of the U-shaped groove is closed, and wherein the entire outer periphery of the wire harnesses accommodated in the U-shaped groove is surrounded by the inner wall surface of the U-shaped groove and the harness pressing tabs to keep the wire harnesses from sliding in the axial direction and moving in the direction perpendicular to the axial direction.

In the clamp of the present invention, the entire periphery of the plurality of wire harnesses accommodated in the U-shaped groove is surrounded with pressure applied elastically from the inner wall surface of the U-shaped groove and a harness pressing tab to keep the wire harnesses from sliding axially and to keep them from moving in the direction perpendicular to the axial direction. Because this has the same effect as wrapping a plurality of wire harnesses with tape, it eliminates the cumbersome tape wrapping operation. The same clamp can also be used to retain different numbers of wire harnesses. A plurality of protruding ribs is formed on the inner wall surface on the bottom surface side of the holding portion main unit and extend lengthwise with respect to the wire harnesses from the mid-height position of the U-shaped groove to align the wire harnesses so as to be stacked from the bottom surface, and the open portion above the mid-height position of the U-shaped groove is wide enough to accommodate more wire harnesses above the mid-height position. As a result, the wire harnesses do not have to be aligned beforehand, but can be aligned by the U-shaped groove in the holding portion main unit and secured in a taut configuration. Also, because the holding portion main unit has a simple configuration, the cost of each clamp is low.

In this clamp, a hinge is connected to one end of the cover portion and one end of the holding portion main unit, and the cover portion turns on the hinge to close the open portion of the holding portion main unit. The cover portion has a lock portion formed in the end opposite the hinge, and the holding portion main unit has an engagement portion formed at the end opposite the hinge to engage the lock portion, and the lock portion engages the engagement portion to keep the open portion closed when the cover portion turns on the hinge and closes the open portion of the holding portion main unit. The lock portion has a first locking claw and a second locking claw to engage the engagement portion; the first locking claw is positioned to engage the engagement portion with the cover portion keeping the space above the space accommodating the wire harnesses in the holding portion main unit somewhat wider, and the second locking claw is positioned to engage the engagement portion with the cover portion keeping the space above the space accommodating the wire harnesses in the holding portion main unit narrower. Thus, a plurality of wire harnesses can be reliably secured regardless of the number.

In this clamp, four protruding ribs are arranged to position one wire harness at the bottom of the U-shaped groove and to form a shaped space to stack two more wire harnesses on top of this wire harness, the three stacked wire harnesses forming an upside-down triangle. The width of the U-shaped groove on the inner wall surface from the mid-height position of the U-shaped groove to the open portion facing upward becomes larger from the mid-height position to allow three more wire harnesses to be stacked on top of the two wire harnesses at the mid-height position and form an upside-down triangle with six wire harnesses. The harness pressing tabs have a tip elastically pressing down on the upper surface of the wire harnesses accommodated inside the U-shaped groove, and the horizontal cross-section of the tip has a curved shape to press down firmly on the middle portion of the upper surface of the wire harnesses in the lengthwise direction.

In this clamp, a panel fixing portion is integrated with the wire harness holding portion main unit to be fixed to a workpiece such as a panel. The panel fixing portion comprises a main portion integrated with the wire harness holding portion and a metal holding tab connected to hold the main portion, a pair of elastic engagement tabs is formed in the holding tab, and the pair of elastic engagement tabs interpose a plate-shaped mounting portion standing erect from the panel.

In summary, the invention discloses :

### <[Brief Explanation of the Drawings]

[FIG 1] A plan view of the wire harness clamp in the first embodiment of the present invention.
[FIG 2] A front view of the clamp in FIG 1.
[FIG 3] A right view of the clamp in FIG 2.
[FIG 4] A cross-sectional view of the clamp from A-A in FIG 2.
[FIG 5] A front view showing three wire harnesses held by the clamp in FIG 2 and mounted on a panel.
[FIG 6] A front view showing six wire harnesses held by the clamp in FIG 2. >

### [Preferred Mode of Embodiment]

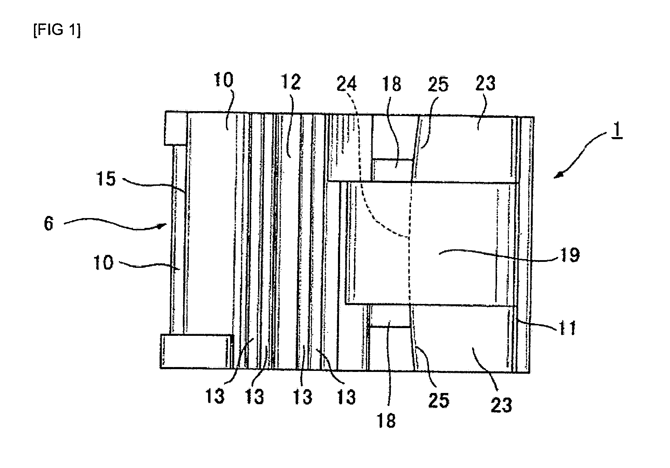

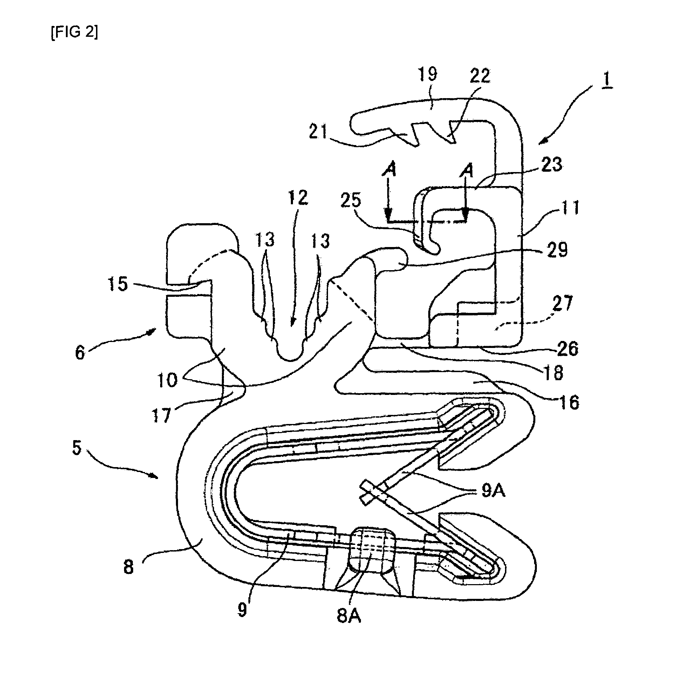

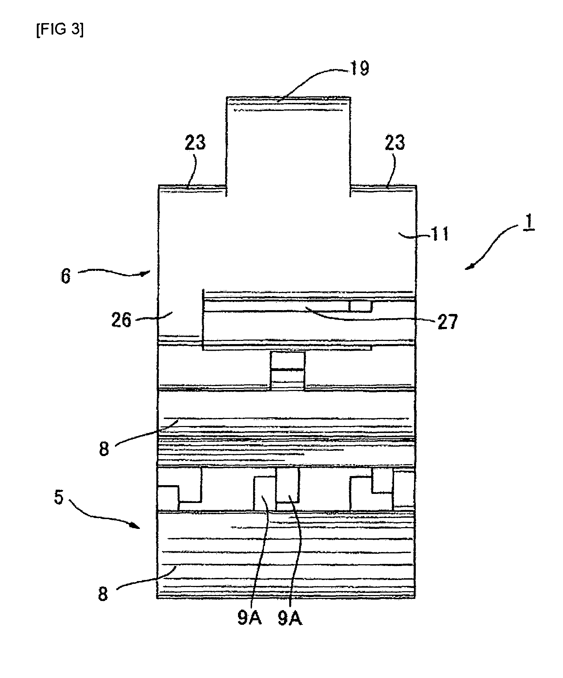

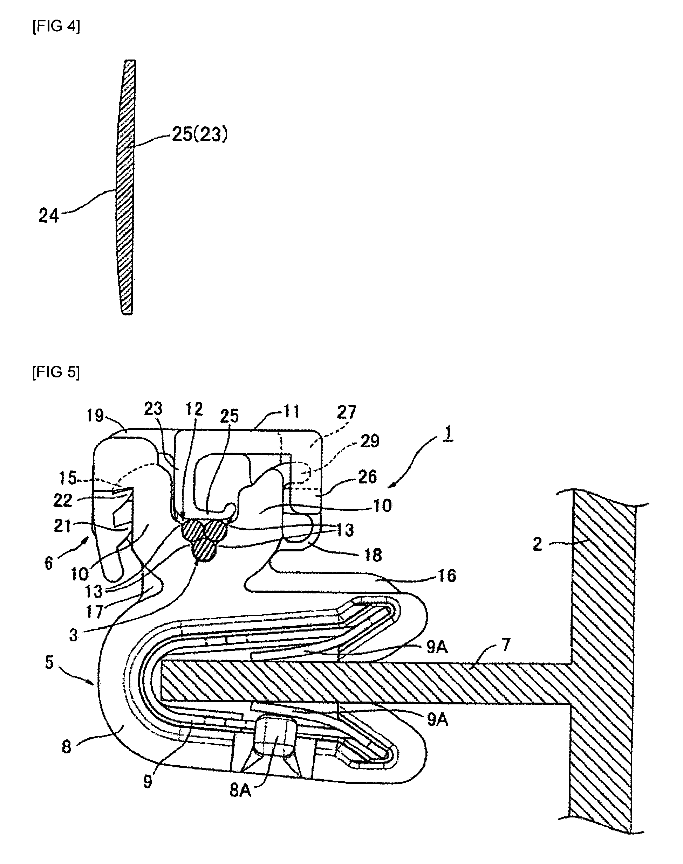

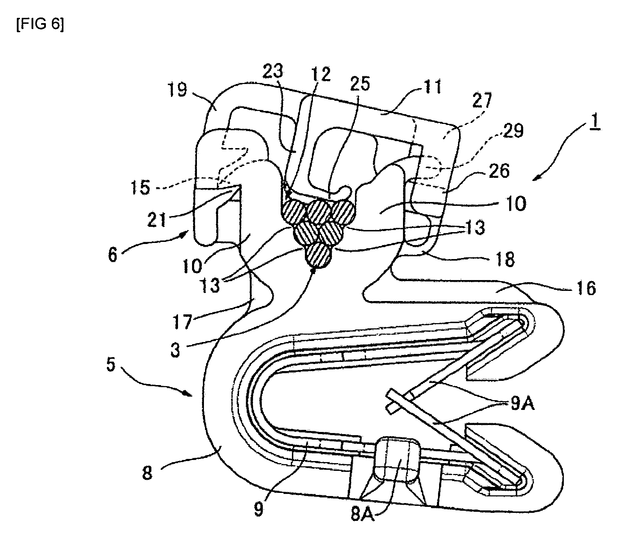

The following is an explanation with reference to the figures of the clip for a plurality of wire harnesses in an embodiment of the present invention. FIG 1, FIG 2 and FIG 3 are a plan view, front view and side view of the clamp 1, and FIG 4 is a cross-sectional view of the clamp 1 from A-A in FIG 2. The entire clamp 1 is integrally molded using a hard plastic except for the metal holding tab 9 in the panel fixing portion 5. The metal holding tab 9 is connected to the panel fixing portion 5. In FIG 5, three wire harnesses 3 are attached to a panel 2 mounting component using the clip 1. In FIG 6, six wire harnesses 3 are held in the clip 1.

The following is an explanation of the configuration of the clip 1 with reference to FIG 1 through FIG 4. The clip 1 comprises a panel fixing portion 5 and a wire harness holding portion 6. The panel fixing portion 5, as shown in FIG 5, holds a plate-shaped mounting portion 7 standing erect from the panel 2. In order to hold the plate-shaped mounting portion 7, the panel fixing portion 5 comprises a main unit 8 in the form of a U shape, its entire length integrally molded with the wire harness holding portion 6, and a metal holding tab 9 in the form of a U shape, its entire length accommodated by and connected to the main unit 8. A pair of elastic engagement tabs 9A is formed at the two ends of the holding tabs 9 formed in a U shape, and hold the plate-shaped mounting portion 7 standing erect on the panel 2 as shown in FIG 5. The clamp 1 is pushed into the panel 2 so that the plate-shaped mounting component 7 in FIG 4 is received between the pair of elastic engagement tabs 9A, and secured to the panel 2. The holding tab 9 is connected when engaged with the U-shaped groove formed in the main unit 8. A stopper 8A is formed in the main unit 8 to keep the holding tab 9 from coming out.

In the embodiment shown in the figures, the panel fixing portion 5 consists of a main unit 8 and a metal holding tab 9 accommodated and held by and connected to the main unit 8 in order to fix the clamp to the panel with force. While the holding portion [sic] 8 and the holding tab 9 are integrally molded of hard plastic, the elastic engagement tabs 9A can also be molded of hard plastic. In the example shown in the figures, the holding tab 9 is formed in a shape to receive the mounting component 7 on the panel 2 from the right in FIG 2. However, it can also be formed in a shape to receive the mounting component 7 on the panel 2 from the right or from below in FIG 2. The panel fixing portion 5 can also have another shape. For example, if a rod-shaped stud standing erect from the panel 2 has threading or circumferential grooves formed in it, the panel fixing portion can be formed to receive and engage the rod-shaped stud. If a mounting hole is formed in the panel 2, an anchor-shaped clip can be formed to be inserted into the mounting hole and engage the hole.

The wire harness holding portion main unit 6 is securely connected to the main unit 8 of the panel fixing portion 5 through integral molding. As shown in FIG 1, it has a fixed width (the vertical length in FIG 1) so that a plurality of wire harnesses can be held along a fixed length. The wire harness holding portion 6, as shown in FIG 2, consists of a rigid holding portion main unit 10 formed in a somewhat U-shaped configuration facing downward from the open upper surface with a U-shaped groove 12 to accommodate a plurality of wire harnesses, and a cover portion 11 for closing the open portion of the holding portion main unit 10. In the holding portion main unit 10, a plurality of protruding ribs 13 extend lengthwise with respect to the wire harnesses (vertically in FIG 1) to stack a plurality of wire harnesses from the bottom surface in, for example, an upside-down triangle from the mid-height position along the inner wall surface in the space of the U-shaped groove 12 in FIG 2. In the embodiment shown in the figures, four protruding ribs 13 are formed so as to position one wire harness on the bottom surface and stack two additional wire harnesses on top of this wire harness. In this way, three wire harnesses can be stacked to form an upside-down triangle as shown in FIG 5.

In the holding portion main unit 10, the width of the U-shaped groove 12 increases from the mid-height position on the inner wall surface from the mid-height position in the space of the U-shaped groove 12 to the open portion above so that even more wire harnesses can be stacked inside. In the embodiment shown in the figures, as shown in FIG 6, a U-shaped groove 12 is formed that is wide enough to stack three wire harnesses on top of the two wire harnesses at the mid-height position. Thus, as shown in FIG 6, six wire harnesses can be stacked in an upside-down triangle shape. In other words, the holding portion main unit 10 uses ribs 13 on the inside wall surface on the bottom surface of the U-shaped groove 12 to stack wire harnesses in an upside-down triangle shape, and the width is great enough to accommodate more wire harnesses in the upper portion to achieve a continuous upside-down triangle shape. Thus, the wire harnesses do not have to be aligned beforehand, but can be aligned by the U-shaped groove 12 in the holding portion main unit 10 and secured in a taut configuration.

An engagement portion 15 is formed in the holding portion main unit 10 which has an engagement shoulder on the side opposite the cover portion 11 for engaging locking claw 21 or 22 on the cover portion 11. The engagement portion 15, as indicated by the dotted lines in FIG 2, is formed on the left in the holding portion main unit 10. Ribs 16, 17 are formed in the border between the bottom portion of the holding portion main unit 10 and the upper side wall of the panel fixing portion 5 to increase the connecting strength.

One end of the cover portion 11 is connected to one side of the holding portion main unit 10 via a thin hinge 18 so as to be able to turn around the hinge 18. The cover 11 is turned on the hinge 18 to close the upper portion of the wire harnesses 3 accommodated by and held in the U-shaped groove 12 in the holding portion main unit 10. This keeps the wire harnesses 3 from coming out. To prevent this, a lock portion 19 is formed on the front end (upper end in FIG 2) of the cover portion 11. A first locking claw 21 and a second locking claw 22 are formed in the lock portion 19 to engage the engagement portion 15 of the holding portion main unit 10. The first locking claw 21 is formed in the front end of the lock portion 19 with a fallen down L-shape as shown in FIG 2, and the second locking claw 22 is formed closer to the base than the first locking claw 21. When the first locking claw 21 engages the engagement portion 15, the cover portion 11 is closed in a form that rises to the left as shown in FIG 6, and the upper portion of the space supporting the wire harnesses in the holding portion main unit 10 can be widened somewhat to increase the number of wire harnesses being accommodated. In the embodiment shown in the figure, six wire harnesses are accommodated and held.

When the second locking claw 22 engages the engagement portion 15, the cover portion 11 closes flat, as shown in FIG 5. The upper portion of the space supporting the wire harnesses in the holding portion main unit 10 is not widened, and wire harnesses are only accommodated in the bottom portion of the space below the mid-height position of the U-shaped groove 12 in the holding portion main unit 10. In the embodiment shown in this figure, three wire harnesses are accommodated and held. As shown in FIG 5 and FIG 6, either the first locking claw 21 or the second locking claw 22 can be selected to engage the engagement portion 15, depending on the number of wire harnesses 3 to be held. This is because the accommodating capacity is increased based on the number of wire harnesses 3 to be held. The engagement position of the first locking claw 21 or the second locking claw 22 is selected for the geometric dimensions of the accommodating shape based on the diameter and number of wire harnesses 3 to be held.

A harness pressing tab 23 is formed in the cover portion 11 to elastically support and envelop the upper portion of the wire harnesses 3 accommodated in the U-shaped groove 12. The harness pressing tab 23 has a tip 25 (FIG 2) formed to elastically press down on the uppermost wire harnesses in the U-shaped groove 12. As shown in FIG 4, which is a cross-sectional view from A-A in FIG 2, a convex curved portion 24 is formed in the middle of the tip 25 of the harness pressing tab 23 to apply stronger pressing force. This allows the tip 25 of the harness pressing tab 23 to apply greater elastic force on top of the wire harnesses in the U-shaped groove 12. The inner wall surface of the U-shaped groove 12 and the tip 25 of the harness pressing tab 23 also envelop the wire harnesses in a manner similar to being wrapped with tape. The pressure applied by the elastic tip 25 has an effect similar to being wrapped with tape. It not only keeps the wire harnesses from moving in the direction perpendicular to the axial direction of the wire harnesses but also keeps the wire harnesses from sliding in the axial direction. As shown in FIG 1, a harness pressing tab 23 including a tip 25 can be formed at both ends of the cover portion 11 widthwise (vertically in FIG 1) with the lock portion 19 between them. In another example, it extends the entire width of the holding portion main unit 10.

As shown in FIG 2, the cover portion 11 has a rigid wall portion 26 near the thin hinge 18 that extends to the right. This keeps the cover portion 11 level at a constant height with respect to the holding portion main unit 10 when turned on the hinge 18 and closed. It also ensures that the harness pressing tab 23 in the cover portion 11 closes with the upper portion of the holding portion main unit 10 in the proper position.

As indicated by the dotted lines in FIG 2, a window-shaped engagement hole 27 is formed in the rigid wall portion 26 that opens to the bottom and to the right. A protruding portion 29 is formed in the holding portion main unit 10 towards the engagement hole 27 in a position adjacent to the harness receiving portion 14 near the cover portion 11. When the cover portion 11 turns on the hinge 18, the protruding portion 20 is inserted into the engagement hole 27 formed in the rigid wall portion 26. In other words, when the cover portion 11 turns on the hinge 18 and the locking claws 21 or 22 for the locking portion 19 engage the locking portion 19 of the holding portion main unit 10, the protruding portion 29 is inserted into the engagement hole 27 and engages the engagement shoulder formed in the engagement hole 27 to lock the closed cover portion 11. Thus, even if the thin hinge 18 breaks for some reason, the closed cover 11 remains locked and the wire harnesses 3 remain secure.

FIG 5 shows three wire harnesses 3 mounted to a mounting component such as a panel 2 using a clamp 1 with this configuration. The three wire harnesses 3 are accommodated at the bottom of the U-shaped groove 12 in the holding portion main unit 10. A plurality of protruding ribs 13 (four in this example) are formed in the bottom surface of the U-shaped groove 12 to stack the wire harnesses 3 on the bottom surface in an upside-down triangle shape. The contours of the inner wall surface of the U-shaped groove 12 are such that one wire harness is positioned on the bottom surface, and the other two wire harnesses are stacked on top of this wire harness. The three wire harnesses 3 do not have to be aligned beforehand. If the three wire harnesses 3 are aligned by the U-shaped groove 12 in the holding portion main unit 10 and secured in a taut configuration, the three wire harnesses 3 conform to the protruding ribs 13 as shown in FIG 5. Next, when the cover portion 11 is turned on the hinge 18, the first locking claw 21 in the locking portion 19 engages the engagement shoulder in the engagement portion 15 of the holding portion main unit 10. If there are three wire harnesses 3, the cover portion 11 can be pushed in and the second locking claw 22 can be engaged with the engagement portion 15. This locks the closed cover portion 11. When locked, the protruding portion 29 of the holding portion main unit 10 is inserted into the engagement hole 27 in the wall portion 26 of the cover portion 11. Together with the hinge 18, this keeps the cover portion securely locked. In this way, as shown in FIG 5, the three wire harnesses are stacked in an upside-down triangle shape.

If the wire harnesses 3 are long, clamps 1 can be installed at multiple locations along the wire harnesses 3. If the wire harnesses are to be installed on an automobile panel, clamps 1 are installed at predetermined locations for the wire harnesses according to the wiring layout. The clamps are positioned towards the mounting portions 7 standing erect from the panel 2, and the elastic engagement portions 9 on the panel fixing portions 5 are pushed in. The panel fixing portions 5 are fixed to the panel 2, and the three wire harnesses 3 are mounted on the panel 2 via the clamps 1.

In the wire harness holding portion 6, three wire harnesses 3 are accommodated in the U-shaped groove 12 in the holding portion main unit 10. The cover unit 10 [sic] is positioned so that the lock portion 19 turning on the hinge 18 engages the engagement portion 15 of the holding portion main unit 10, and the second lock claw 22 engages the engagement shoulder on the engagement portion 15. In this way, the elastic end 25 of the harness pressing tab 23 bends elastically and presses down elastically to envelope the upper portion of the three wire harnesses 3. The curved portion 24 of the tip 25 (FIG 4) ensures that pressure is applied and that the entire outer periphery is under pressure from the U-shaped groove 12 and the harness pressing tab 23 when enveloped. This has the same effect as tape wrapping. The wire harnesses 3 are kept from moving in the direction perpendicular to the axial direction of the wire harnesses, and are kept from sliding in the axial direction of the wire harnesses.

The clamp 1 in FIG 6 can hold a different number of wire harnesses 3. In FIG 6, six wire harnesses 3 are held by the clip 1. In the lock portion 19 here, the first locking claw 21 engages the engagement shoulder of the engagement portion 15. Also here, the width of the U-shaped groove 12 on the inner wall surface from the mid-height position in the space of the U-shaped groove 12 to the open portion is greater above the mid-height position so as to accommodate more wire harnesses in the stack. As shown in FIG 6, three wire harnesses can be stacked on top of the two wire harnesses at the mid-height position. As a result, the wire harnesses 3 do not have to be aligned beforehand, but can be aligned by the U-shaped groove 12 in the holding portion main unit 10 and secured in a taut configuration. The six wire harnesses 3 are enveloped so that the inner wall surface of the U-shaped groove 12 and the elastic tip 25 of the harness pressing tab 23 apply pressure around the entire periphery of the wire harnesses. This has the same effect as tape wrapping. The wire harnesses 3 are kept from moving in the direction perpendicular to the axial direction of the wire harnesses and are kept from sliding in the axial direction of the wire harnesses. In other words, the second locking claw 22 in the locking portion 19 engages the engagement shoulder of the engagement portion 15 so that, even when locked, the six wire harnesses 3 are enveloped by the inner surface wall of the U-shaped groove 12 with the tip 25 of the harness pressing tab 23 applying pressure to the outer periphery of the wire harnesses. This has the same effect as tape wrapping. The wire harnesses 3 are kept from moving in the direction perpendicular to the axial direction of the wire harnesses and are kept from sliding in the axial direction of the wire harnesses.

In both FIG 5 and FIG 6, the resilient strength of the tip 25 of the harness pressing tab 23 and the curvature radius of the curve in the curved portion 24 can be selected to envelop and apply pressure to a plurality of wire harnesses 3 with the same strength as tape wrapping.

As explained above, a plurality of wire harnesses can be held by the same clip 1 in a manner similar to tape wrapping and easily mounted on a mounting component such as a panel. (In the embodiments shown in the figures, three and six wire harnesses are held, but another number of wire harnesses can also be held.) As a result, the cumbersome tape wrapping operation can be eliminated, and the same clamp can be used to retain different numbers of wire harnesses. Because a clip is easy to mount on a mounting component, the wire harness mounting operation does not require any skill an can be performed in a short amount of time.

### [Problem] To immobilize a plurality of wire harnesses in the axial direction and the direction perpendicular to the axial direction of the wire harnesses without requiring wrapping with tape.

[Solution] The clamp 1 comprises a panel fixing portion 5 and a wire harness holding portion 6. The wire harness holding portion 6 includes a holding portion main unit 10 with a U-shaped groove 12 with an open upper portion and a cover portion 11. A plurality of protruding ribs 13 are formed on the inner wall surface on the bottom surface side of the holding portion main unit 10 and extend lengthwise with respect to the wire harnesses from the mid-height position of the U-shaped groove 12, the open portion upward from the mid-height position of the U-shaped groove 12 being wide enough to accommodate more wire harnesses above the mid-height position. The cover portion 11 is formed with an elastic harness pressing tab 23 (25) for elastically pressing down on the upper portion of the wire harnesses, so that the entire outer periphery of the wire harnesses are elastically pressed down upon when covered.

### [Keys to Drawings]

- 1: Wire Harness Clamp
- 2: Panel Workpiece
- 3: Wire Harness
- 5: Panel Fixing Portion
- 6: Wire Harness Holding Portion
- 7: Panel Mounting Portion
- 8: Panel Fixing Portion Main Unit
- 8A: Stopper
- 9: Holding Tab
- 9A: Elastic Engaging Tab
- 10: Holding Portion Main Unit
- 11: Cover Portion
- 12: U-Shaped Groove
- 13: Protruding Rib
- 15: Engaging Portion
- 16, 17: Rib
- 18: Hinge
- 19: Lock Portion
- 21: First Locking Pawl
- 22: Second Locking Pawl
- 23: Harness Pressing Tab
- 24: Curved Portion at End of Harness Pressing Tab
- 25: End of Harness Pressing Tab
- 26: Rigid Wall Portion
- 27: Engagement Hole
- 29: Protruding Portion

## Claims

1. A clamp (1) having a wire harness holding portion (6) for holding a plurality of wire harnesses, wherein the wire harness holding portion (6) indudes a rigid holding portion main unit (10) having a U-shaped groove (12) with an open upper portion and a space accommodating a plurality of wire harnesses (3), and a cover portion (11) for closing the open upper portion of the holding portion main unit (10), wherein a plurality of protruding ribs (13) is formed on the inner wall surface on the bottom surface side of the holding portion main unit (10) and extend lengthwise with respect to the wire harnesses from the mid-height position of the U-shaped groove (12) to align the wire harnesses (3) so as to be stacked from the bottom surface, wherein the open portion above the mid-height position of the U-shaped groove (12) is wide enough to accommodate more wire harnesses (3) above the mid-height position, wherein the cover portion (11) is formed with elastic wire harness pressing tabs (23) for elastically pressing down on the upper portion of the wire harnesses (3) when the cover portion (11) is closed and the open portion of the U-shaped groove (12) is closed, and wherein the entire outer periphery of the wire harnesses (3) accommodated in the U-shaped groove (12) is surrounded by the inner wall surface of the U-shaped groove (12) and the harness pressing tabs (23) to keep the wire harnesses (3) from sliding in the axial direction and moving in the direction perpendicular to the axial direction.

2. The clamp of claim 1, wherein a hinge (18) is connected to one end of the cover portion (11) and one end of the holding portion main unit (10), and wherein the cover portion (11) turns on the hinge (18) to close the open portion of the holding portion main unit (10).

3. The clamp of claim 2, wherein the cover portion (11) has a lock portion (19) formed in the end opposite the hinge (18) and the holding portion main unit (10) has an engagement portion (15) formed at the end opposite the hinge (18) to engage the lock portion (19), and wherein the lock portion (19) engages the engagement portion (15) to keep the open portion closed when the cover portion (11) turns on the hinge (18) and closes the open portion of the holding portion main unit (12).

4. The clamp of claim 3, wherein the lock portion (18) has a first locking claw (21) and a second locking claw (22) to engage the engagement portion (15), wherein the first locking claw (21) is positioned to engage the engagement portion (15) with the cover portion (11) keeping the space above the space accommodating the wire harnesses (3) in the holding portion main unit (10) somewhat wider, and wherein the second locking claw (22) is positioned to engage the engagement portion (15) with the cover portion (11) keeping the space above the space accommodating the wire harnesses (3) in the holding portion main unit (10) narrower.

5. The clamp in any one of claims 1 through 4, wherein four protruding ribs (13) are arranged to position one wire harness (3) at the bottom of the U-shaped groove (12) and to form a shaped space to stack two more wire harnesses (3) on top of this wire harness (3), the three stacked wire harnesses forming an upside-down triangle.

6. The clamp of claim 5, wherein the width of the U-shaped groove (12) on the inner wall surface from the mid-height position of the U-shaped groove (12) to the open portion facing upward becomes larger from the mid-height position to allow three more wire harnesses (3) to be stacked on top of the two wire harnesses (3) at the mid-height position and form an upside-down triangle with six wire harnesses (3).

7. The clamp in any one of claims 1 through 6, wherein the harness pressing tabs (23) have a tip elastically pressing down on the upper surface of the wire harnesses (3) accommodated inside the U-shaped groove (12), and the horizontal cross-section of the tip has a curved shape to press down firmly on the middle portion of the upper surface of the wire harnesses (3) in the lengthwise direction.

8. The clamp in any one of claims 1 through 5, wherein a panel fixing portion (5) is integrated with the wire harness holding portion main unit (10) to be fixed to a workpiece (2) such as a panel.

9. The clamp of claim 8, wherein the panel fixing portion (5) comprises a main portion (8) integrated with the wire harness holding portion (10) and a metal holding tab (9) connected to hold the main portion (8), wherein a pair of elastic engagement tabs (9A) is formed in the holding tab (9), and wherein the pair of elastic engagement tabs (9A) interpose a plate-shaped mounting portion (7) standing erect from the panel (2).
